# EUROPÄISCHE PATENTSCHRIFT

(11) **EP 4 342 070 B1**
(45) Veröffentlichungstag und Bekanntmachung des Hinweises auf die Patenterteilung: **20.11.2024**
(21) Anmeldenummer: 22726577.4
(22) Anmeldetag: 20.05.2022
(51) Int. Cl.: H02M 1/12, H02P 21/22, H02M 7/493, H02P 27/08

(54) **SPRITZGIESSMASCHINE MIT ELEKTRISCHEN SCHALTEINHEITEN UND VERFAHREN ZUM SYNCHRONISIEREN VON STRÖMEN VON ELEKTRISCHEN SCHALTEINHEITEN**
INJECTION MOULDING MACHINE WITH ELECTRICAL SWITCHING UNITS AND METHOD FOR SYNCHRONISING THE CURRENTS OF ELECTRICAL SWITCHING UNITS
MACHINE DE MOULAGE PAR INJECTION DOTEE D'UNITES DE COMMUTATION ÉLECTRIQUES ET PROCEDE DE SYNCHRONISATION DES COURANTS D'UNITES DE COMMUTATION ELECTRIQUES

(30) Priorität: 21.05.2021 AT 504072021
(43) Veröffentlichungstag der Anmeldung: 27.03.2024
(73) Patentinhaber: Wittmann Technology GmbH, 1220 Wien (AT)
(72) Erfinder: KALENDER, Tomas, 2123 Wolfpassing a.d. Hochleithen (AT); BERGKIRCHNER, Klaus, 1150 Wien (AT); FRIEDRICH, Christoph, Wien 1220 (AT)
(74) Vertreter: SONN Patentanwälte GmbH & Co KG
(86) Internationale Anmeldenummer: PCT/AT2022/060175
(87) Internationale Veröffentlichungsnummer: WO 2022/241499

(56) Entgegenhaltungen:
- EP-A2- 2 408 099
- WO-A1-2020/246021
- DE-T5- 112016 004 632
- JP-B2- 5 447 400
- US-A- 5 450 309
- US-A1- 2021 408 956

## Beschreibung

Die Erfindung betrifft eine Spritzgießmaschine, insbesondere zum Herstellen von Kunststoffteilen, aufweisend:
mindestens eine elektrische Maschine, insbesondere einen Synchronmotor;
mehrere elektrisch parallel geschaltete Schalteinheiten, insbesondere Wechselrichtereinheiten, die zum Antreiben der elektrischen Maschine eingerichtet sind, wobei jede Schalteinheit zumindest einen elektrischen Ausgang und zumindest einen dem Ausgang zugeordneten elektrischen Schalter aufweist, der gemäß einem Schaltmuster schaltbar ist, wobei korrespondierende Ausgänge der Schalteinheiten elektrisch parallel zu einem gemeinsamen Ausgang verschaltet sind, der mit der elektrischen Maschine verbunden ist;
zumindest eine übergeordnete Steuerung und/oder Regelung, die dazu eingerichtet ist, die Schalteinheiten mit Steuersignalen anzusteuern, um die elektrische Maschine zu betreiben;
eine Messeinrichtung zum Messen von Ausgangsströmen (I_{U1}-I_{W3}) an den Ausgängen der Schalteinheiten; und
zumindest einen Korrekturregler, der dazu eingerichtet ist, im Falle einer Abweichung zwischen einem gemessenen Ausgangsstrom an einem Ausgang und einem Sollwert für einen Ausgangsstrom ein entsprechendes Steuersignal anzupassen, sodass durch das Schaltmuster vorgegebene Schaltzeitpunkte des zumindest einen Schalters, der dem betreffenden Ausgang zugeordnet ist, zeitlich nach vorne oder nach hinten verschoben werden und dadurch die Abweichung zwischen dem Sollwert und dem Ausgangsstrom reduziert wird, wobei der zumindest eine Korrekturregler dazu eingerichtet ist, Schaltzeitpunkte, insbesondere die Schaltflanken, von Schaltern, die korrespondierenden Ausgängen zugeordnet sind, zu synchronisieren, sodass diese gleichzeitig schalten.

Des Weiteren betrifft die Erfindung ein Verfahren zum Synchronisieren von Ausgangsströmen von elektrisch parallel geschalteten Schalteinheiten, die mit einer elektrischen Maschine einer Spritzgießmaschine verbunden sind, wobei jede Schalteinheit zumindest einen elektrischen Ausgang und zumindest einen dem Ausgang zugeordneten elektrischen Schalter aufweist, der gemäß einem Schaltmuster geschaltet wird, wobei korrespondierende Ausgänge der Schalteinheiten elektrisch parallel zu einem gemeinsamen Ausgang für die elektrische Maschine verschaltet sind und das Verfahren folgende Schritte aufweist:
Ausgeben von Steuersignalen an die Schalteinheiten;
Messen von Ausgangsströmen an den Ausgängen der Schalteinheiten;
Vergleichen gemessener Ausgangsströme mit jeweils einem Sollwert für einen Ausgangsstrom;
Anpassen eines entsprechenden Steuersignals durch zumindest einen Korrekturregler im Falle einer Abweichung zwischen einem gemessenen Ausgangsstrom an einem Ausgang und dem Sollwert, sodass durch das Schaltmuster vorgegebene Schaltzeitpunkte des zumindest einen Schalters, der dem betreffenden Ausgang zugeordnet ist, zeitlich nach vorne oder nach hinten verschoben werden und dadurch die Abweichung zwischen dem Sollwert und dem Ausgangsstrom reduziert wird, wobei der zumindest eine Korrekturregler Schaltzeitpunkte, insbesondere die Schaltflanken, von Schaltern, die korrespondierenden Ausgängen zugeordnet sind, synchronisiert, sodass diese gleichzeitig schalten.

Spritzgießmaschinen zum Herstellen von Teilen aus Kunststoff oder anderen Materialien existieren in unterschiedlichen Größen und Varianten. Bei der Entwicklung solcher Maschinen sind die Hersteller bestrebt Bauteile zu konstruieren, die möglichst universell eingesetzt werden können, zuverlässig funktionieren und dennoch günstig sind. Im Idealfall sollen die entwickelten Bauteile durch Skalierung und nur mit geringfügigen Adaptierungen an unterschiedliche Anforderungen anpassbar und an verschiedenen Stellen einer Spritzgießmaschine einsetzbar sein.

Spritzgießmaschinen besitzen meist mehrere elektrische Maschinen zum Aktuieren verschiedenster Komponenten und Einheiten. Beispielsweise kann ein Motor für eine Schließeinheit, ein Motor für einen Einspritzkolben und ein Motor für eine Plastiziereinheit vorgesehen sein. Um die Motoren anzutreiben, werden elektrische Schalteinheiten, insbesondere Wechselrichtereinheiten, eingesetzt. Die elektrischen Leistungen der Schalteinheiten müssen an die elektrischen Leistungen der elektrischen Maschine entsprechend angepasst sein. Je höher jedoch die geforderte Leistung ist, desto größer und teurer werden die Schalteinheiten. Es wäre daher wünschenswert, universell einsetzbare Schalteinheiten zur Verfügung zu haben, die skalierbar und gleichzeitig günstig sind.

Aus dem Stand der Technik ist bekannt, Schalteinheiten parallel zu schalten und dadurch die Energieflüsse auf die einzelnen Schalteinheiten aufzuteilen. Dadurch ist es möglich, eine elektrische Maschine großer Leistung mit mehreren Schalteinheiten geringerer Leistung zu betreiben. Je nach Bedarf an elektrischer Leistung kann die Anzahl parallel geschalteter Schalteinheiten erhöht oder verringert werden. Dies kommt dem oben erwähnten Bestreben nach Vereinheitlichung und Skalierbarkeit entgegen.

Da die ausgegebenen Ströme von parallelgeschalteten Schalteinheiten im Betrieb jedoch mitunter beträchtlich voneinander abweichen, müssen zur Kompensation dieser Unterschiede und der beim Schalten entstehenden Stromimpulsspitzen dementsprechend große Drosseln mit hoher Induktivität an den Ausgängen der Schalteinheiten eingesetzt werden. Große Drosseln sind jedoch teuer und nehmen viel Platz ein. Außerdem besitzen nachgeschaltete Drosseln den Nachteil, dass sie die Bandbreite einer allfälligen Stromregelung begrenzen können. Drosseln mit hoher Induktivität begrenzen die Bandbreite stärker.

Aus der US 7,138,773 B2 sind parallelgeschaltete Wechselrichtereinheiten mit hohen Leistungen zum Ansteuern von Asynchronmotoren in Fahrzeugen bekannt. Mit einem komplizierten Algorithmus, dem mehrere Parameter und Eingangsgrößen zugrunde gelegt werden, werden zur Synchronisierung der in den Wechselrichtereinheiten enthaltenen Schalter die Schaltzeiten von zu früh schaltenden Schaltern in den Wechselrichtern verzögert. Die Schalter der US 7,138,773 B2 sind als IGBTs oder GTOs ausgebildet und für hohe Ströme ausgelegt. Aus diesem Grund schalten die Schalter in US 7,138,773 B2 im Vergleich zu anderen Schaltertypen sehr langsam. Nachteiligerweise muss zur Ausführung des Algorithmus das tatsächliche Umschalten der Schalter überwacht und die Ausgangsspannung gemessen werden. Hierzu ist eine genaue und aufwendige Schaltflankenüberwachung notwendig. Ein weiterer Nachteil ist, dass das System der US 7,138,773 B2 für Fahrzeuge ausgelegt ist und die verwendeten Schalter auf Grund ihrer Auslegung für hohe Ströme vergleichsweise langsam schalten. Damit kann keine so hohe Präzision und Dynamik bei der Ansteuerung von elektrischen Maschinen erreicht werden, wie dies bei Spritzgießmaschinen erforderlich ist.

JP 5 447 400 B2 und DE 11 2016 004 632 T5 offenbaren parallel geschaltete Schalteinheiten und entsprechende Verfahren zu deren Betrieb. Im Detail zeigt JP 5 447400 B2 eine Vorrichtung zum Betreiben von Motoren. Die Motoren sind über ein Getriebe gekuppelt. Drehgeber geben Auskunft über die Rotorposition. Jeder Motor wird von einer Treibergruppe angesteuert. Jede einzelne Treibergruppe besitzt wiederum parallel angeordnete Motorantriebseinheiten mit Schaltern zum Erzeugen von PWM-Schaltmustern. DE 11 2016 004 632 T5 offenbart die Parallelschaltung von Wechselrichtern, wobei Timingdifferenzen zwischen Schaltflanken abgemildert werden sollen. Zu diesem Zweck werden die Steuersignale der parallel arbeitenden IGBTs verschoben oder verzögert.

Weiters sind parallel geschaltete Schalteinheiten aus EP 2 408 099 A2, US 5,450,309 A und WO 2020/246021 A1 bekannt.

Es ist daher Aufgabe der vorliegenden Erfindung, die Nachteile des Standes der Technik zu beseitigen oder zumindest teilweise zu lindern. Vorzugsweise ist es Aufgabe der vorliegenden Erfindung, eine Spritzgießmaschine mit Schalteinheiten zur Ansteuerung elektrischer Maschinen zur Verfügung zu stellen, bei der die Drosseln zur Kompensation von Unterschieden in den Ausgangsströmen parallelgeschalter Schalteinheiten in der Größe möglichst klein gehalten oder gar gänzlich weggelassen werden können.

Gelöst wird diese Aufgabe zunächst durch eine Spritzgießmaschine nach Anspruch 1. Bevorzugte Ausführungsformen sind in den abhängigen Ansprüchen angegeben.

Erfindungsgemäß ist bei einer Spritzgießmaschine der eingangs erwähnten Art vorgesehen, dass korrespondierende Ausgänge der Schalteinheiten über Verbindungsleitungen mit den jeweiligen gemeinsamen Ausgängen verbunden sind, wobei zum Glätten der Ausgangsströme jede Verbindungsleitung zumindest einmal gemeinsam gegenläufig mit der Verbindungsleitung eines anderen korrespondierenden Ausgangs durch ein Glättungsinduktivitätselement geführt ist.

Vorteilhafterweise können durch die Erfindung die Ausgangsströme der Schalteinheiten aneinander angeglichen werden, sodass die Induktivität der bei der Parallelschaltung von Schalteinheiten benötigten Drosseln und damit deren Baugröße reduziert werden kann oder die Drosseln sogar zur Gänze entfallen können. Typischerweise besitzen die Drosseln im Stand der Technik Werte von in der Größenordnung 1 mH oder höher. Bei der Erfindung können Drosseln oder andere induktive Bauteile zum Glätten der Ausgangsströme gänzlich entfallen oder Glättungsinduktivitätselemente verwendet werden, die eine Induktivität besitzen, die um den Faktor 100-1000 geringer ist als beim Stand der Technik. Die Erfindung liegt dabei in der Erkenntnis, dass auch bei Verwendung von identen Schalteinheiten die Ausgangsströme voneinander abweichen, weil sich die Impedanzen in den einzelnen Strompfaden, die Signallaufzeiten der Steuersignale und die Schaltzeiten der Schalter trotz aller ingenieurtechnischer Bemühungen, diese Unterschiede auszugleichen, voneinander unterscheiden. Durch den zumindest einen verwendeten Korrekturregler werden die genannten Unterschiede jedoch vorteilhafterweise dadurch kompensiert, dass ein Steuersignal für eine Schalteinheit im Falle einer Abweichung eines Ausgangsstromes von einem Sollwert entsprechend angepasst wird. Die Schaltzeitpunkte, insbesondere die Schaltflanken, von Schaltern, die korrespondierenden Ausgängen zugeordnet sind, werden dabei durch den zumindest einen Korrekturregler im Wesentlichen synchronisiert, sodass diese gleichzeitig schalten. Mit anderen Worten werden die Unterschiede in den Schaltzeiten der Schalter ausgeglichen. Bevorzugt ist, wenn sowohl steigende, als auch fallende Schaltflanken von sämtlichen Schaltern, die korrespondierenden Ausgängen zugeordnet sind, synchronisiert werden können. Die steigenden und fallenden Flanken können unabhängig voneinander angepasst werden. Bei einer bevorzugten Variante der Erfindung kann der zumindest eine Korrekturregler Schaltflanken um bis zu 60 ns zeitlich nach vorne oder hinten verschieben. Bei einer bevorzugten Ausführungsform ist die Abweichung von Schaltzeitpunkten von Schaltern, die korrespondierenden Ausgängen zugeordnet sind, nach der Synchronisation geringer als die Anstiegszeit der Schalter, vorzugsweise geringer als die Hälfte, insbesondere geringer als 25 %, geringer als 20 %, geringer als 15 % oder geringer als 10 % der Anstiegszeit der Schalter. Verbleibende transiente Unterschiede zwischen den Ausgangsströmen korrespondierender Ausgänge können mit Hilfe von Glättungsinduktivitätselementen, insbesondere in-sich geschlossene Ferritelemente, ausgeglichen werden. Die Anstiegszeit der Schalter kann beispielsweise zwischen 50 ns und 150 ns betragen. Eine beispielhafte Anstiegszeit von IGBT-Schaltern liegt bei ca. 100 ns. Bevorzugt ist, wenn die Schaltzeitpunkte aller Schalter, die korrespondierenden Ausgängen zugeordnet sind, nach der Synchronisation maximal 60 ns, vorzugsweise maximal 30 ns, maximal 20 ns oder maximal 10 ns, voneinander abweichen. Durch die exakte Synchronisation der Schaltzeitpunkte kann auf große Glättungsdrosseln, wie sie beim Stand der Technik üblich sind, verzichtet werden. Vorteilhafterweise kann die Kompensation auf Basis von gewöhnlichen Strommessungen erfolgen; eine komplizierte Schaltflankenüberwachung wie bei der US 7,138,773 B2 ist nicht notwendig. Der zumindest eine Korrekturregler kann beispielsweise als P-, ein PI- oder PID-Regler ausgebildet sein. Erfindungsgemäß sind korrespondierende Ausgänge der Schalteinheiten miteinander elektrisch zu einem gemeinsamen Ausgang verbunden. Die elektrische Maschine kann an den oder die gemeinsamen Ausgänge angeschlossen werden. Als "korrespondierend" werden in diesem Zusammenhang Ausgänge der Schalteinheiten bezeichnet, die dazu vorgesehen sind, gleiche Ausgangsspannungen und gleiche Ausgangsströme auszugeben, also mit anderen Worten gleichartig angesteuert werden. Insbesondere werden als "korrespondierend" Ausgänge bezeichnet, die gleichen Außenleitern ("Phasen") zugeordnet sind. Wenn die Schalteinheiten demnach beispielsweise als Wechselrichtereinheiten mit jeweils drei Ausgängen ("dreiphasig") ausgebildet sind, sind jeweils alle Ausgänge für den Außenleiter U ("Phase U"), alle Ausgänge für den Außenleiter V ("Phase V") und alle Ausgänge für den Außenleiter W ("Phase W") der Wechselrichtereinheiten miteinander verbunden. Somit liegen in diesem Fall drei gemeinsame Ausgänge für die Außenleiter U, V und W vor, an die die elektrische Maschine angeschlossen werden kann. Demgemäß werden auch alle Ausgangsströme, Ausgangsspannungen und Verbindungsleitungen von korrespondierenden Ausgängen als einander "korrespondierend" bezeichnet. Als Steuersignale für die Schalteinheiten werden vorzugsweise Spannungsvorgabesignale verwendet. Die Spannungsvorgabesignale geben die auszugebenden Ausgangsspannungen an einem Ausgang einer Schalteinheit vor. Durch die Spannungsvorgabesignale können die Schalteinheiten ableiten, welche Ausgangsspannungen an den Ausgängen ausgegeben werden soll, und ein entsprechendes Schaltmuster, insbesondere ein PWM-Schaltmuster (PWM: Pulsweitenmodulation), für den zumindest einen Schalter erzeugen. Zu diesem Zweck können die Schalteinheiten jeweils einen oder mehrere Modulatoren aufweisen, der das PWM-Schaltmuster erzeugt, gemäß welchem der zumindest eine Schalter geschaltet wird. Der zumindest eine Korrekturregler ist im Unterschied zur US 7,138,773 B2 dazu eingerichtet, das Steuersignal anzupassen, bevor aus dem Steuersignal das Schaltmuster erzeugt bzw. abgeleitet wird. Vorteilhafterweise ist daher eine Schaltflankenüberwachung wie beim Stand der Technik nicht notwendig. Eine Strommessung eines entsprechenden Ausgangsstromes genügt. Die Steuersignale werden von einer übergeordneten Regelung und/oder Steuerung für die elektrische Maschine vorgegeben. Bevorzugt wird eine übergeordnete Regelung verwendet. Insbesondere kann eine Stromregelung, vorzugsweise in einem Koordinatensystem auf Basis von Raumzeigerdarstellung, verwendet werden. Der übergeordneten Regelung können als Messgrößen Ausgangsströme der Schalteinheiten zur Verfügung gestellt werden. Beispielsweise können sämtliche Ausgangsströme der Schalteinheiten der übergeordneten Regelung als Messgrößen zur Verfügung gestellt werden. Alternativ kann auch vorgesehen sein, dass nur jeweils ein Ausgangsstrom von allen korrespondieren Ausgangsströmen der Schalteinheiten der übergeordneten Regelung als Messgröße zur Verfügung gestellt wird. In diesem Fall kann angenommen werden, dass alle korrespondieren Ausgangsströme im Wesentlichen ident sind. Die Steuersignale der übergeordneten Steuerung/Regelung können durch den zumindest einen Korrekturregler angepasst werden, bevor diese den Schalteinheiten zugeführt werden. Wenn eine Schalteinheit mehrere Ausgänge aufweist, kann für jeden Ausgang ein eigenes Steuersignal bzw. eine eigene Steuersignalleitung vorgesehen sein, auf der Steuersignale an die Schalteinheiten gesendet werden. Die Steuersignalleitungen müssen nicht physisch vorhanden sein, sondern können auch softwaretechnisch implementiert sein. Vorzugsweise sind die Schalteinheiten gleichartig ausgebildet. In einer bevorzugten Ausführungsform sind die Schalteinheiten als gleichartige Wechselrichtereinheiten mit jeweils drei Ausgängen ausgebildet. Jeder Wechselrichtereinheit sind somit bevorzugt drei Steuersignalleitungen zugeordnet. Die Schalteinheiten können alternativ auch beispielsweise durch schaltbare Halbbrücken, Abwärtswandler oder Aufwärtswandler gebildet sein. Es können mehrere Korrekturregler vorgesehen sein, die unterschiedlichen Ausgängen zugeordnet sind. Wenn ein Korrekturregler einem Ausgang zugeordnet ist, wird der entsprechende Ausgangsstrom gemessen. Insbesondere wenn mehr als zwei Schalteinheiten und/oder jeweils mehrere Ausgänge an den Schalteinheiten vorgesehen sind, wie dies typischerweise bei dreiphasigen Wechselrichtereinheiten der Fall ist, können auch mehrere Korrekturregler vorgesehen sein, die im Falle einer Abweichung die entsprechenden Steuersignale anpassen. Der oder die Korrekturregler können insbesondere softwaretechnisch implementiert sein. Der zumindest eine Schalter einer Schalteinheit wird gemäß einem Schaltmuster zu vorgegebenen Schaltzeitpunkten geschaltet, sodass an dem Schalter zugeordneten Ausgang im Wesentlichen die vorgegebene Ausgangsspannung oder der vorgegebene Ausgangsstrom ausgegeben wird. Das Schaltmuster wird vorzugsweise durch eine PWM (Pulsweitenmodulation) gebildet. Durch die Anpassung des Steuersignals durch den zumindest einen Korrekturregler wird in weiterer Folge das daraus abgeleitete Schaltmuster verändert und dadurch die Ausgangsspannung an einem entsprechenden Ausgang der Schalteinheit verändert. Dadurch wird der Ausgangsstrom an den Sollwert angepasst. Die Schaltzeiten der Schalter von korrespondierenden Schalteinheiten werden dadurch synchronisiert. Vorzugsweise sind jedem Ausgang zumindest zwei Schalter, die zu einer Halbbrücke verschaltet sind, zugeordnet. Die elektrische Maschine ist vorzugsweise eine Drehfeldmaschine. Besonders bevorzugt ist die elektrische Maschine als Synchronmotor oder als Asynchronmotor ausgebildet. Unter mehreren Schalteinheiten sind zumindest zwei, vorzugsweise zumindest drei Schalteinheiten zu verstehen. Die übergeordnete Steuerung und/oder Regelung sowie der zumindest eine Korrekturregler können in einem Mikroprozessor implementiert sein. Die Schalteinheiten können eine Baugruppe bilden. Die Baugruppe ist vorzugsweise in einem Gerät, beispielsweise in einem Gerät mit einem gemeinsamen Gehäuse, integriert. Die Schalteinheiten einer Baugruppe können auf einer gemeinsamen Leiterplatte montiert sein. Bei einer bevorzugten Ausführungsform sind zumindest drei Schalteinheiten, insbesondere Wechselrichtereinheiten, zu einer Baugruppe zusammengefasst. Auch der oder die Mikroprozessoren für die übergeordnete Steuerung und/oder Regelung sowie den zumindest einen Korrekturregler und die Messeinrichtung können Teil der Baugruppe und beispielsweise ebenfalls auf der gemeinsamen Leiterplatte montiert sein. Eine solche Baugruppe kann in großen Stückzahlen gefertigt werden und ist universell in Spritzgießmaschinen einsetzbar. Beispielsweise können alle Schalteinheiten einer Baugruppe parallelgeschaltet und wie beschrieben betrieben werden, um eine elektrische Maschine anzutreiben. Wenn jedoch nicht alle Schalteinheiten zum Betrieb einer einzigen elektrischen Maschine benötigt werden, können die nicht benötigten Schalteinheiten zum Betrieb einer weiteren elektrischen Maschine eingesetzt werden. Demnach können in der Baugruppe neben parallelgeschalteten Schalteinheiten auch weitere insbesondere gleichartige Schalteinheiten vorhanden sein. Bei einer Ausführungsform ist die Impedanz zwischen den korrespondierenden Ausgängen einer Schalteinheit und dem gemeinsamen Ausgang jeweils ident. Günstig ist, wenn eine die Schalter der Schalteinheiten versorgende Zwischenkreisspannung für alle Schalter ident ist. Ausgangsströme können mit sehr kleinen Glättungsinduktivitätselementen, kleiner als 5 µH, geglättet werden.

In einer bevorzugten Ausführungsform sind n Schalteinheiten vorgesehen und jedem Ausgang von zumindest n-1 Schalteinheiten jeweils ein Korrekturregler zugeordnet, der ein entsprechendes Steuersignal anpasst, wenn der gemessene Ausgangsstrom an dem Ausgang von dem Sollwert abweicht. "n" ist dabei eine natürliche Zahl und bezeichnet die Anzahl der Schalteinheiten. Diese Ausführungsform ermöglicht beispielsweise die Anpassung der Ausgangsströme von n-1 Schalteinheiten an die korrespondierenden Ausgangsströme der n-ten Schalteinheit. Alternativ kann jedem Ausgang der n Schalteinheiten ein eigener Korrekturregler zugeordnet sein. Somit können sämtliche Ausgangsströme aller Schalteinheiten gemäß einem Sollwert angepasst werden.

Eine besonders einfache Variante zur Anpassung des Steuersignals ergibt sich, wenn der zumindest eine Korrekturregler dazu eingerichtet ist, einen Offset-Signalwert auf das Steuersignal aufzuschalten, um das Steuersignal anzupassen. Wenn mehrere Korrekturregler vorgesehen sind, können alle Korrekturregler jeweils einen Offset-Signalwert auf ein Steuersignal für einen Ausgang aufschalten. Der Offset-Signalwert kann zu dem Steuersignal addiert oder subtrahiert werden. Der Offset-Signalwert wird auf das Steuersignal aufgeschaltet, bevor dieses von der Schalteinheit empfangen wird. Insbesondere ist der zumindest eine Korrekturregler dazu eingerichtet, den Offset-Signalwert auf das Steuersignal aufzuschalten, bevor daraus ein Schaltmuster abgeleitet wird. Der Offset-Signalwert kann positive oder negative Werte annehmen oder auch Null sein.

Um bei einem neuen Start der elektrischen Maschine bzw. der Spritzgießmaschine die Einschwingzeit des zumindest einen Korrekturreglers zu verkürzen, kann ein insbesondere nicht-flüchtiger Speicher vorgesehen sein, in dem der Offset-Signalwert oder ein zeitlicher Mittelwert davon hinterlegbar ist. Wenn mehrere Korrekturregler vorgesehen sind, können diese die Offset-Signalwerte in dem Speicher hinterlegen. Bei einer Ausführungsform können vorteilhafterweise bereits bei der Produktion der Schalteinheiten Offset-Signalwerte in dem Speicher hinterlegt werden. Die Offset-Signalwerte können also bereits bei der Produktion der Schalteinheiten ermittelt werden und in den Speicher hinterlegt werden.

Um Drehfeldmaschinen als elektrische Maschinen betreiben zu können, ist es günstig, wenn die Schalteinheiten als Wechselrichtereinheiten ausgebildet sind und jeweils zumindest zwei, vorzugsweise zumindest drei, elektrische Ausgänge aufweisen. In einer ganz besonders bevorzugten Ausführungsform sind zumindest drei Wechselrichtereinheiten mit jeweils drei Ausgängen, also zumindest drei dreiphasige Wechselrichtereinheiten, vorgesehen.

Bei einer Ausführungsform der Erfindung ist vorgesehen, dass n Schalteinheiten vorgesehen sind und eine der Schalteinheiten eine Referenz-Schalteinheit darstellt und allen Ausgängen der anderen n-1 Schalteinheiten jeweils ein Korrekturregler, insbesondere ein P-, PI- oder PID-Regler, zugeordnet ist, wobei die Korrekturregler dazu eingerichtet sind, jeweils ein Steuersignal der n-1 Schalteinheiten derart anzupassen, dass die Ausgangsströme der n-1 Schalteinheiten den jeweils korrespondierenden Ausgangsströmen der Referenz-Schalteinheit entsprechen. "n" ist eine natürliche Zahl und bezeichnet die Anzahl an Schalteinheiten. Vorteilhafterweise können bei dieser Ausführungsform Korrekturregler für die Ausgangsströme der Referenz-Schalteinheit entfallen und damit Aufwand und Rechenzeit reduziert werden. Den Ausgängen der Referenz-Schalteinheit sind also keine Korrekturregler zugeordnet. Als Sollwerte verwenden die Korrekturregler an den Ausgängen der anderen n-1 Schalteinheiten die zu den jeweiligen Ausgangsströmen der n-1 Schalteinheiten korrespondierenden Ausgangsströme der Referenz-Schalteinheit.

Bei einer alternativen Ausführungsform ist vorgesehen, dass allen Ausgängen sämtlicher Schalteinheiten jeweils ein Korrekturregler, insbesondere ein P-, PI- oder PID-Regler, zugeordnet ist, wobei die Korrekturregler dazu eingerichtet sind, jeweils ein Steuersignal der Schalteinheiten derart anzupassen, dass die Ausgangsströme der Schalteinheiten jeweils einem gemittelten Summenstrom aus dem jeweiligen Ausgangsstrom und allen korrespondierenden Ausgangsströmen entsprechen. Mit anderen Worten wird bei dieser Ausführungsform jeweils aus allen jeweils korrespondierenden Ausgangsströmen ein gemittelter Summenstrom gebildet und die Steuersignale durch die Korrekturregler derart angepasst, dass die Ausgangsströme dem jeweiligen gemittelten Summenstrom aus korrespondierenden Ausgangsströmen entsprechen. Die Mittelung des Summenstroms erfolgt durch Division des Summenstroms durch die Anzahl an Schalteinheiten. Der Summenstrom selbst kann durch Addition gemessener korrespondierender Ausgangsströme ermittelt werden.

Erfindungsgemäß sind korrespondierende Ausgänge der Schalteinheiten über Verbindungsleitungen mit den jeweiligen gemeinsamen Ausgängen verbunden, wobei die Verbindungsleitungen korrespondierender Ausgänge zum Glätten der Ausgangsströme durch zumindest ein Glättungsinduktivitätselement geführt sind. Durch die präzise Synchronisierung der Schaltzeitpunkte bei der vorliegenden Erfindung kann das zumindest eine Glättungsinduktivitätselement deutlich kleiner ausfallen als beim Stand der Technik. Vorteilhaft ist, wenn eine Glättung kurzzeitig auftretender transienter Übergänge erfolgt. Zur Glättung transienter Übergänge kann der Induktivitätswert des zumindest einen Glättungsinduktivitätselements gering, vorzugsweise unter 5µH, gehalten werden. Im Vergleich dazu weisen Glättungsinduktivitätselemente beim Stand der Technik typischerweise einen um den Faktor 100-1000 größeren Induktivitätswert im Bereich von 1 mH auf. Auch die Baugröße der Glättungsinduktivitätselemente, die beim Stand der Technik verwendet werden, ist typischerweise um den Faktor 100-1000 größer als das zumindest eine Glättungsinduktivitätselement, das bei der vorliegenden Erfindung eingesetzt werden kann. Dies deshalb, weil beim Stand der Technik Harmonische oberhalb der Grundfrequenz kompensiert werden sollen. Bei einer bevorzugten Ausführungsform ist die Induktivität des Glättungsinduktivitätselements kleiner als 5 µH. Bevorzugt ist ein in-sich geschlossenes Ferritelement, insbesondere ein Ferritring als Glättungsinduktivitätselement vorgesehen. Vorteilhaft ist, wenn das zumindest eine Glättungsinduktivitätselement stromkompensiert ausgeführt ist, sodass sich magnetische Felder im Glättungsinduktivitätselement aufheben und dadurch eine magnetische Sättigung des Elements vermieden wird. Stromkompensierte Glättungsinduktivitätselemente werden gegensinnig von Ausgangsströmen durchflossen, sodass sich die magnetischen Felder im Wesentlichen kompensieren, wenn die Ströme im Wesentlichen gleich sind. Bei einem stromkompensierten Glättungsinduktivitätselement werden Gleichtaktstörungen vorteilhafterweise unterdrückt. Bei dieser Ausführungsform sind die Verbindungsleitungen von korrespondierenden Ausgängen der Schalteinheiten durch Glättungsinduktivitätselemente geführt. Da durch den zumindest einen Korrekturregler korrespondierende Ausgangsströme bereits aneinander angepasst sind und somit keine oder allenfalls nur geringfügige Unterschiede zwischen korrespondierenden Ausgangsströmen vorhanden sind, kann das zumindest eine Glättungsinduktivitätselement klein und damit günstig ausfallen.

Das Glättungsinduktivitätselement ist bevorzugt durch eine Gleichtaktdrossel oder ein vorzugsweise in-sich geschlossenes, insbesondere ringförmiges, Magnetkernelement gebildet. Das Magnetkernelement kann beispielsweise aus Ferrit oder Metall, insbesondere Eisen oder Eisenpulver, bestehen. Bevorzugt ist ein in-sich geschlossenes Ferritelement, insbesondere ein Ferritring, als Glättungsinduktivität vorgesehen. Ein solches Ferritelement kann ein Gewicht von weniger als 40 g aufweisen. Das Ferritelement kann einen Außendurchmesser von unter 40 mm, insbesondere unter 30 mm aufweisen. Die Gleichtaktdrossel besitzt zwei gegensinnig gewickelte Wicklungen. Vorzugsweise sind die Glättungsinduktivitätselemente in einen Anschlussblock mit Anschlussklemmen, an den der Motor angeschlossen werden kann, integriert.

Erfindungsgemäß ist vorgesehen, dass jede Verbindungsleitung zumindest einmal gemeinsam gegenläufig mit der Verbindungsleitung eines anderen korrespondierenden Ausgangs durch ein Glättungsinduktivitätselement geführt ist. Bevorzugt ist, wenn jede Verbindungsleitung zumindest einmal gemeinsam mit der Verbindungsleitung eines jeden anderen korrespondierenden Ausgangs durch ein Glättungsinduktivitätselement geführt ist. Bevorzugt ist das Glättungsinduktivitätselement ein Ferritkernelement. "Gegenläufig" bedeutet, dass die Verbindungsleitungen mit einander entgegengesetzten Stromrichtungen durch ein Glättungsinduktivitätselement geführt werden. Vorteilhaft ist, dass sich die Konstantströme aufheben und Abweichungen durch die Induktivität kompensiert werden. Dies kann beispielsweise dadurch erreicht werden, indem die Glättungsinduktivitätselemente Wicklungen mit unterschiedlichem Windungssinn aufweisen oder indem, im Falle von Magnetkernelementen, die Verbindungsleitungen voneinander entgegengesetzten Seiten durch das Magnetkernelement geführt werden. Bevorzugt wird jede Verbindungsleitung zumindest einmal mit der Verbindungsleitung eines jeden anderen korrespondierenden Ausgangs durch ein Glättungsinduktivitätselement geführt. Bei einer alternativen Ausführungsform kann vorgesehen sein, dass von k Verbindungsleitungen k-1 Verbindungsleitungen jeweils nur genau einmal mit einer weiteren korrespondierenden Verbindungsleitung durch ein Glättungsinduktivitätselement gegenläufig geführt werden und die k-te Verbindungsleitung mit zwei weiteren korrespondierenden Verbindungsleitungen durch ein Glättungsinduktivitätselement gegenläufig geführt wird.

Die erfindungsgemäße Aufgabe wird auch durch ein Verfahren zum Synchronisieren von Ausgangsströmen von elektrisch parallel geschalteten Schalteinheiten, insbesondere Wechselrichtereinheiten, nach Anspruch 10 gelöst.

Erfindungsgemäß ist bei einem Verfahren der eingangs erwähnten Art vorgesehen, dass korrespondierende Ausgänge der Schalteinheiten über Verbindungsleitungen mit den jeweiligen gemeinsamen Ausgängen verbunden sind, wobei zum Glätten der Ausgangsströme jede Verbindungsleitung zumindest einmal gemeinsam gegenläufig mit der Verbindungsleitung eines anderen korrespondierenden Ausgangs durch ein Glättungsinduktivitätselement geführt ist.

Hinsichtlich der Vorteile und Ausgestaltung der Merkmale des Verfahrens wird auf die Ausführungen in Zusammenhang mit der oben beschriebenen Spritzgießmaschine verwiesen. Vorzugsweise werden mehrere Ausgangsströme gemessen und jeweils mit Sollwerten verglichen und die entsprechenden Steuersignale im Falle einer Abweichung zwischen einem Ausgangsstrom und einem Sollwert angepasst. Zu diesem Zweck sind bevorzugt mehrere Korrekturregler vorgesehen, die jeweils einem Ausgang zugeordnet sind. Der Vergleich eines gemessenen Ausgangsstromes mit einem Sollwert bzw. das Bestimmen einer Abweichung kann durch Subtraktion des gemessenen Ausgangsstromes von dem Sollwert erfolgen. Das Steuersignal wird durch den zumindest einen Korrekturregler angepasst, bevor aus dem Steuersignal ein Schaltmuster, insbesondere ein PWM-Schaltmuster, abgeleitet wird.

Bei einer bevorzugten Ausführungsform ist vorgesehen, dass der zumindest eine Korrekturregler einen Offset-Signalwert auf das Steuersignal aufschaltet, um das Steuersignal anzupassen. Wenn mehrere Korrekturregler vorgesehen sind, die unterschiedlichen Ausgängen der Schalteinheiten zugeordnet sind, können diese jeweils Offset-Signalwerte auf entsprechende Steuersignale aufschalten. Der zumindest eine Korrekturregler schaltet den Offset-Signalwert auf das Steuersignal auf, bevor aus diesem ein Schaltmuster abgeleitet wird.

Bei einer Weiterbildung der Erfindung ist vorgesehen, dass der Offset-Signalwert oder ein zeitlicher Mittelwert davon in einen insbesondere nicht-flüchtigen Speicher hinterlegt wird, sodass der Offset-Signalwert oder dessen zeitlicher Mittelwert bei einer erneuten Anwendung des Verfahrens zur Verfügung steht. Bei dieser Ausführungsform kann beispielsweise bereits bei der Produktion einer Spritzgießmaschine ein Offset-Signalwert ermittelt werden. Der ermittelte Offset-Signalwert kann anschließend in dem Speicher hinterlegt werden, sodass die Einschwingzeit der Korrekturregler verkürzt werden kann. Ein auf diese Weise ermittelte und hinterlegte Offset-Signalwert kann immer bei einem Neustart des Verfahrens zur Verfügung stehen.

Eine effiziente Ausgestaltung des Verfahrens ergibt sich, wenn n Schalteinheiten vorgesehen sind und eine der Schalteinheiten eine Referenz-Schalteinheit darstellt, wobei jedem Ausgang der anderen n-1 Schalteinheiten ein Korrekturregler zugeordnet ist und die Sollwerte aller Ausgangsströme der anderen n-1 Schalteinheiten durch die zu den jeweiligen Ausgangsströmen der n-1 Schalteinheiten korrespondierenden Ausgangsströme der Referenz-Schalteinheit gebildet werden. "n" ist eine natürliche Zahl und bezeichnet die Anzahl der Schalteinheiten.

Bei einer alternativen Ausgestaltung der Erfindung kann vorgesehen sein, dass jedem Ausgang ein Korrekturregler zugeordnet ist und für jeden Ausgangsstrom ein gemittelter Summenstrom aus dem jeweiligen Ausgangsstrom und allen korrespondierenden Ausgangsströmen als Sollwert verwendet wird.

Die Erfindung wird im Folgenden an Hand von Figuren beschrieben, auf die sie jedoch nicht beschränkt sein soll. Es zeigen:
Fig. 1 schematisch eine vollelektrische Spritzgießmaschine aus dem Stand der Technik in seitlicher Ansicht;
Fig. 2 ein elektrisches Blockschaltbild der Erfindung gemäß einer ersten Ausführungsform;
Fig. 3 ein elektrisches Blockschaltbild der Erfindung gemäß einer zweiten Ausführungsform;
Fig. 4A-D jeweils Verschaltungen von Verbindungsleitungen zwischen parallel geschalteten Schalteinheiten und gemeinsamen Ausgängen mit Glättungsinduktivitätselementen;
Fig. 5 eine Schalteinheit; und
Fig. 6 mehrere Schalteinheiten.

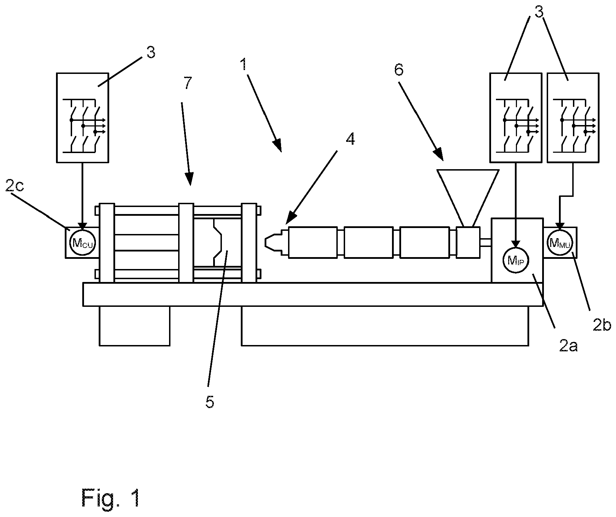

Fig. 1 zeigt schematisch eine vollelektrische Spritzgießmaschine 1 aus dem Stand der Technik in seitlicher Ansicht. Die Spritzgießmaschine 1 besitzt mehrere elektrische Maschinen 2, die jeweils an einzelnen Wechselrichtereinheiten 3 betrieben werden. Die elektrische Maschine 2a treibt einen Einspritzkolben 4 zum Einbringen von Material in ein Formwerkzeug 5 an. Die elektrische Maschine 2b treibt eine Plastifiziereinheit 6 zum Aufbereiten von Rohmaterial an. Die elektrische Maschine 2c treibt eine Schließeinheit 7 zum Öffnen und Schließen des Formwerkzeugs 5 an.

Spritzgießmaschinen 1 existieren in unterschiedlichen Größen und Bauformen. Dabei werden elektrische Maschinen 2 unterschiedlicher Leistung und Bauart eingesetzt. Die Leistungen der zugehörigen Wechselrichtereinheiten 3 müssen dabei an die Leistungen der elektrischen Maschinen 2 angepasst sein, d.h. Ströme und Spannungen in der entsprechenden Größenordnung ausgeben können. Je höher jedoch die Leistungen sind, desto teurer und größer werden die Wechselrichtereinheiten 3.

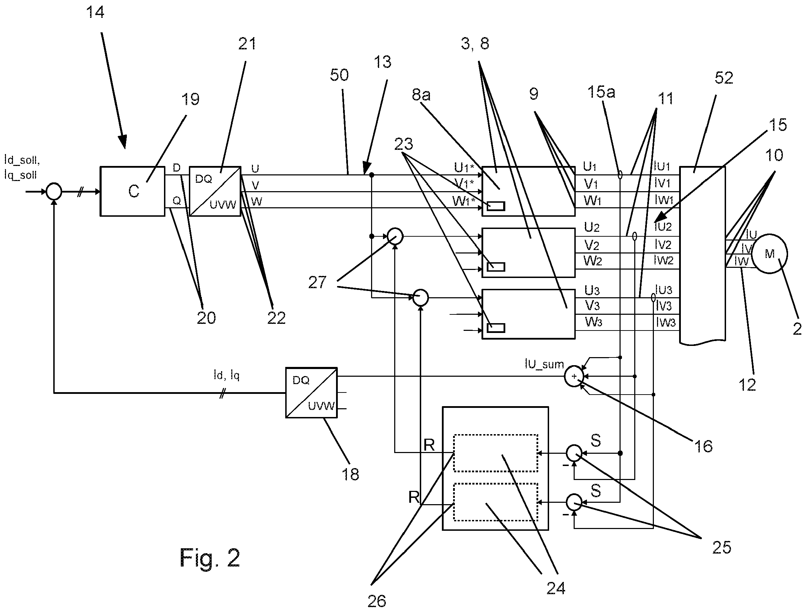

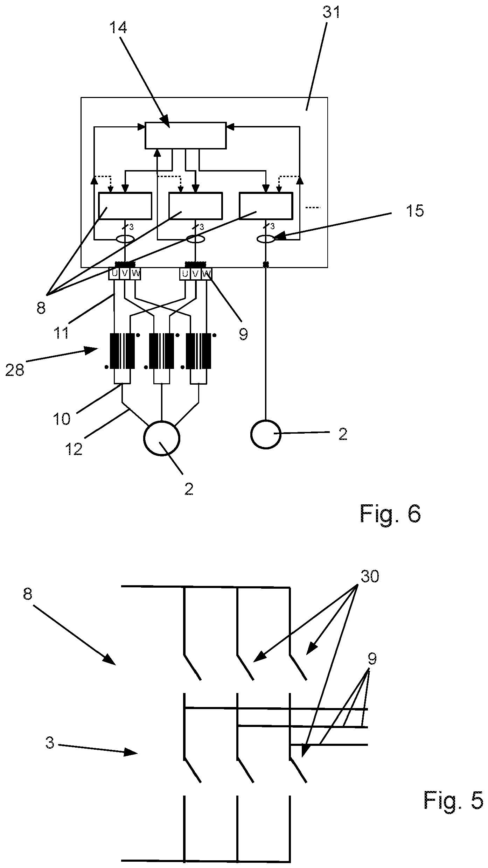

Erfindungsgemäß ist daher vorgesehen, die elektrischen Maschinen 2 jeweils an elektrisch parallel geschalteten Schalteinheiten 8 zu betreiben, wie dies beispielsweise in Fig. 2 gezeigt ist. Wenn höhere Leistungen benötigt werden, werden mehr Schalteinheiten 8 parallel geschaltet, was der Skalierbarkeit entgegenkommt. Die Einzelleistungen der Schalteinheiten 8 können vorteilhafterweise geringer sein als die Leistung der angeschlossenen elektrischen Maschine 2. In Fig. 5 ist eine beispielhafte Schalteinheit 8 näher dargestellt.

Fig. 2 zeigt ein elektrisches Blockschaltbild gemäß einer ersten Ausführungsform der Erfindung. In Fig. 2 sind drei (n=3) als Wechselrichtereinheiten 3 ausgebildete Schalteinheiten 8 elektrisch parallel verschaltet. Die Schalteinheiten 8 besitzen jeweils drei Ausgänge 9, die den Außenleitern ("Phasen") U, V und W zugeordnet sind. Jeweils korrespondierende Ausgänge 9 der Schalteinheiten 8, also Ausgänge 9 gleicher Außenleiter U, V und W, sind miteinander über Verbindungsleitungen 11 elektrisch zu gemeinsamen Ausgängen 10 verbunden. Jeder gemeinsame Ausgang 10 ist einem Außenleiter U, V oder W zugeordnet. Die elektrische Maschine 2 ist über Motorverbindungsleitungen 12 mit den gemeinsamen Ausgängen 10 verbunden. An den Ausgängen 9 werden PWM-modulierte Ausgangsspannungen ausgegeben.

Die Schalteinheiten 8 werden über Steuersignale 13 angesteuert. Die Steuersignale 13 sind durch U₁*, V₁* und W₁* veranschaulicht. Jeder Ausgang 9 jeder Schalteinheit 8 wird über ein eigenes Steuersignal 13 angesteuert. Die Steuersignale 13 werden von einer übergeordneten Regelung 14 vorgegeben, die dazu vorgesehen ist, die Ausgangsströme I_{U1}-I_{W3} der Ausgänge 9 in den Verbindungsleitungen 11 und damit folglich die Außenleiterströme I_{U}, I_{V}, I_{W} in den Motorverbindungsleitungen 12 zu regeln. Größen, die die Schalteinheiten 8 betreffen, werden in dieser Offenbarung mit nummerierten Indizes versehen. In der gezeigten Ausführungsform werden sämtliche Ausgangsströme I_{U1}-I_{W3} der Schalteinheiten 8 mit Hilfe von Strommesssensoren 15a einer Messeinrichtung 15 gemessen und der übergeordneten Regelung 14 zur Verfügung gestellt. Dies ist zum Zwecke der Übersicht allerdings nur für den Außenleiter U dargestellt. Für die anderen Außenleiter V und W gelten die Aussagen jedoch analog. In der gezeigten Ausführungsform werden jeweils korrespondierende Ausgangsströme I_{U1}-I_{W3} in einem Summenblock 16 addiert, um die Außenleiterströme I_{U}, I_{V}, I_{W} (repräsentiert durch Summenströme I_{U_sum} etc.) in den Motorverbindungsleitungen 12 zu erhalten. Gezeigt ist dies nur für den Außenleiter U, für die anderen Außenleiter V und W gelten die Ausführungen analog. In einer alternativen Ausführungsform kann auch vereinfachend angenommen werden, dass korrespondierende Ausgangsströme I_{U1}-I_{W3} der Außenleiter U, V, W ident sind, sodass nur jeweils ein Ausgangsstrom I_{U1}-I_{W3} eines Außenleiters U, V, W rückgeführt und mit der Anzahl der Schalteinheiten 8 multipliziert werden muss, um den entsprechenden Außenleiterstrom I_{U}, I_{V}, I_{W} zu erhalten. Die durch Summenbildung ermittelten und rückgeführten Außenleiterströme I_{U}, I_{V}, I_{W} werden durch einen ersten Koordinatentransformationsblock 18 geführt und von der Stranggrößendarstellung in ein zweiachsiges dq-Koordinatensystem der Raumzeigerdarstellung transformiert, sodass transformierte Ströme I_{d}, I_{q} im dq-Koordiantensystem erhalten werden. Die transformierten Ströme I_{d}, I_{q} werden mit einer Stromvorgabe I_{d_soll}, I_{q_soll} als Führungsgröße verglichen, die ebenfalls in Raumzeigerdarstellung im dq-Koordinatensystem vorgegeben wird. Die sich aus dem Vergleich ergebende Abweichung wird einem Stromregler 19 zugeführt, der auf Basis der Abweichung zwischen der Stromvorgabe I_{d_soll}, I_{q_soll} und den transformierten Strömen I_{d}, I_{q} Stellgrößen 20 vorgibt, welche einem zweiten Koordinatentransformationsblock 21 zugeführt werden, um die Stellgrößen 20 in Stranggrößendarstellung für die Außenleiter U, V, W zu erhalten. Die transformierten Stellgrößen 22 werden an die parallelgeschalteten Schalteinheiten 8 ausgegeben. Diese können zur Erzeugung des (PWM-)Schaltmusters für die Schalter 30 jeweils einen oder mehrere Modulatoren 23 aufweisen. Die Modulatoren 23 können natürlich auch vor den Schalteinheiten 8 angeordnet sein. Die Steuersignale 13 gelangen über Steuersignalleitungen 50 zu den Schalteinheiten. Vollständig gezeigt ist dies für den Außenleiter U. Die Ansteuerung für die Außenleiter V und W ist analog. Bei den Steuersignalleitungen 50 wie auch den übrigen Blöcken, wie etwa dem Summenblock 16, dem Modulator 23, den Koordinatentransformationsblöcken 18, 21 und dem Stromregler 19, muss es sich nicht um physische Leitungen oder Blöcke handeln. Diese können auch, genauso wie die noch näher zu beschreibenden Korrekturregler 24, softwaretechnisch implementiert sein.

Werden Schalteinheiten 8 parallel geschaltet, können korrespondierende Ausgangsströme I_{U1}-I_{W3}, beispielsweise die Ausgangsströme I_{U1},I_{U2} und I_{U3}, trotz gleichartigen Aufbaus der Schalteinheiten 8 auf Grund von unterschiedlichen Schaltzeiten der in den Schalteinheiten 8 enthaltenen Schalter, unterschiedlichen Impedanzen in den Strompfaden der Ausgangsströme I_{U1}-I_{W3} und unterschiedlicher Signallaufzeiten der Steuersignale 13 voneinander abweichen. Um die Abweichungen und um durch nicht synchronisierte Schaltvorgänge hervorgerufene Stromspitzen zu reduzieren, werden im Stand der Technik große Drosseln mit hoher Induktivität verwendet. Derartige Drosseln nehmen jedoch viel Platz ein und sind teuer.

Erfindungsgemäß ist daher zumindest ein Korrekturregler 24 vorgesehen, der dazu eingerichtet ist, im Falle einer Abweichung zwischen einem gemessenen Ausgangsstrom I_{U1}-I_{W3} an einem Ausgang 9 einer Schalteinheit 8 und einem Sollwert S ein entsprechendes Steuersignal 13 anzupassen. Durch die Anpassung des Steuersignals 13 werden die durch das Schaltmuster vorgegebenen Schaltzeitpunkte des zumindest einen Schalters, der dem betreffenden Ausgang 9 zugeordnet ist, zeitlich nach vorne oder nach hinten verschoben werden und dadurch die Abweichung zwischen dem Sollwert S und dem Ausgangsstrom I_{U1}-I_{W3} reduziert wird. Durch den zumindest einen Korrekturregler 24 werden die Ausgangsströme I_{U1}-I_{W3} der Schalteinheiten 8 gleich gehalten und damit auch die Schaltzeitpunkte von korrespondierenden Schaltern 30 indirekt synchronisiert.

Fig. 2 zeigt eine erste Ausführungsform der Erfindung. Eine der insgesamt n=3 Schalteinheiten 8 ist dabei als Referenz-Schalteinheit 8a ausgebildet. Die Steuersignale 13 der anderen n-1 Schalteinheiten 8 sollen bei dieser Ausführungsform derart angepasst werden, dass deren Ausgangsströme I_{U2}, I_{U3}, I_{V2}, I_{V3}, I_{W2} und I_{W3} den jeweils korrespondieren Ausgangsströmen I_{U1}, I_{V1} und I_{W1} der Referenz-Schalteinheit 8a entsprechen. Zu diesem Zweck sind allen Ausgängen 9 für die Ausgangsströme I_{U2}, I_{U3}, I_{V2}, I_{V3}, I_{W2} und I_{W3} der anderen n-1 Schalteinheiten 8 Korrekturregler 24 zugeordnet. In Fig. 2 sind zum Zwecke der Übersicht nur die Korrekturregler 24 für die dem Außenleiter U zugeordneten Ausgänge 9 bzw. Ausgangsströme I_{U2}, I_{U3} dargestellt. Die Ausgangsströme I_{U2} und I_{U3} sollen mit Hilfe der dargestellten Korrekturregler 24 dem Ausgangsstrom I_{U1} entsprechen (analoges gilt für die Ausgangsströme der Außenleiter V und W). Die Korrekturregler 24 sind daher dazu eingerichtet, entsprechende Steuersignale 13 für die anderen n-1 Schalteinheiten 8 derart anzupassen, dass die Ausgangsströme I_{U2} und I_{U3} im Falle einer Abweichung von dem Ausgangsstrom I_{U1} geändert werden. Zu diesem Zweck wird für die dargestellten Korrekturregler 24 als Sollwert S der Ausgangsstrom I_{U1} gewählt. Die Abweichung zwischen einem Ausgangsstrom und einem Sollwert S kann mittels Subtraktion in einem Subtraktionsblock 25 ermittelt werden. Im Falle einer Abweichung zwischen einem der Ausgangsströme I_{U2} und I_{U3} der anderen n-1 Schalteinheiten 8 von dem korrespondierenden Ausgangsstrom I_{U1} der Referenz-Schalteinheit 8a schalten die dargestellten Korrekturregler 24 einen positiven oder negativen Offset-Signalwert R auf die entsprechenden Steuersignale 13 auf, um die PWM-modulierte Ausgangsspannung der anderen n-1 Schalteinheiten 8 zu reduzieren oder zu erhöhen. Die Korrekturreglerausgänge 26 der Korrekturregler 24 sind zu diesem Zweck mit den Steuersignalleitungen 50 über einen Summenblock 27 verbunden, sodass die Offset-Signalwerte R auf die Steuersignale 13 aufgeschaltet werden können. Wie bereits erwähnt, muss die Steuersignalleitung 50 nicht physisch vorhanden sein, sondern kann softwaretechnisch implementiert sein. Wenn im Betrieb also die Ausgangsströme I_{U2} und I_{U3} von dem Ausgangsstrom I_{U1} abweichen, stellen die dargestellten Korrekturregler 24 diese Abweichungen fest und erzeugen einen Offset-Signalwert R, sodass die Steuersignale 13 entsprechend angepasst werden und dadurch die Abweichungen reduziert werden. Vorzugsweise sind die Korrekturregler 24 als P-, PI-, oder PID-Korrekturregler ausgebildet. Der zumindest eine Korrekturregler 24 und die übergeordnete Regelung 14 können in einem oder mehreren Mikroprozessoren zeitdiskret implementiert sein. Die Korrekturregler für die den Ausgangsströmen I_{V2}, I_{V3}, I_{W2} und I_{W3} zugeordneten Ausgängen 9 sind in Fig. 2 zum Zwecke der Übersicht nicht dargestellt; die Aussagen über die dargestellten Korrekturregler 24 gelten in entsprechender Weise aber auch für diese Korrekturregler. Die nicht dargestellten Korrekturregler passen somit ebenfalls entsprechende Steuersignale 13 durch Aufschalten von Offset-Signalwerten R an, sodass die Ausgangsströme I_{V2} und I_{V3} an den Ausgangsstrom I_{V1} und die Ausgangsströme I_{W2} und I_{W3} an den Ausgangsstrom I_{W1} der Referenz-Schalteinheit 8a angepasst werden.

Die Offset-Signalwerte R oder zeitlichen Mittelwerte davon können in insbesondere nicht-flüchtigen Speichern (nicht gezeigt) hinterlegt werden. Dadurch können die Einschwingzeiten der Korrekturregler 24 bei einer erneuten Anwendung des Verfahrens bzw. bei einem Neustart des Motors 2 reduziert werden. Die Offset-Signalwerte R können bereits bei der Produktion der Schalteinheiten 8 ermittelt werden. Insbesondere im Falle von PI-Reglern kann vorgesehen sein, dass die Integralanteile (I-Anteile) der Korrekturregler 24 in einem insbesondere nicht-flüchtigen Speicher hinterlegt werden.

Bei der Ausführungsform von Fig. 2 ist zusammenfassend also vorgesehen, dass eine der Schalteinheiten 8 eine Referenz-Schalteinheit 8a darstellt und allen Ausgängen 9 der anderen n-1 Schalteinheiten 8 jeweils ein Korrekturregler 24 zugeordnet ist, wobei die Korrekturregler 24 dazu eingerichtet sind, jeweils ein Steuersignal 13 der anderen n-1 Schalteinheiten 8 derart anzupassen, dass die Ausgangsströme I_{U2}-I_{W3} der anderen n-1 Schalteinheiten 8 den jeweils korrespondierenden Ausgangsströmen I_{U1}-I_{W1} der Referenz-Schalteinheit 8a entsprechen.

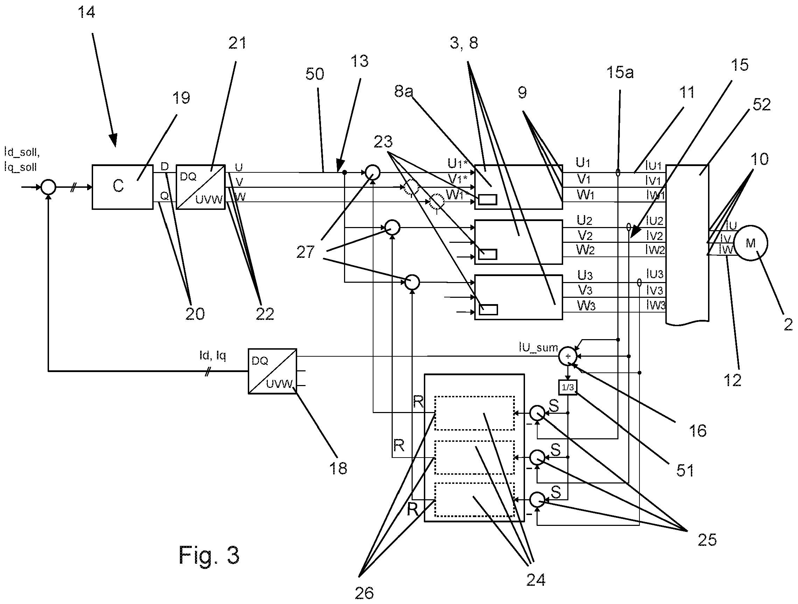

Fig. 3 zeigt eine alternative Ausführungsform der Erfindung. Da der grundsätzliche Aufbau der Ausführungsform gemäß Fig. 3 im Wesentlichen dem Aufbau von Fig. 2 entspricht, wird im Folgenden nur auf die Unterschiede eingegangen. In Fig. 3 ist jedem Ausgang 9 jeder Schalteinheit 8 und damit jedem Ausgangsstrom I_{U1}-I_{W3} ein eigener Korrekturregler 24 zugeordnet. Zum Zwecke der Übersicht sind wiederum nur die Korrekturregler 24 für die Ausgänge 9 der Schalteinheiten 8 dargestellt, die dem Außenleiter U zugeordnet sind. Im Unterschied zu der Ausführungsform gemäß Fig. 2 ist bei der Ausführungsform gemäß Fig. 3 keine Referenz-Schalteinheit 8a vorgesehen. Der Sollwert S für einen Korrekturregler 24 wird durch einen gemittelten Summenstrom I_{U_sum} aus allen korrespondierenden Ausgangsströmen I_{U1}-I_{U3} gebildet. Entsprechendes gilt für die nicht dargestellten Korrekturregler der anderen Ausgänge 9 der Schalteinheiten 8. Die Mittelung der Summenströme kann durch Addieren korrespondierender gemessener Ausgangsströme I_{U1}-I_{W3} und anschließendes Dividieren durch die Anzahl der korrespondierenden Ausgangsströme erfolgen. In Fig. 3. erfolgt dies durch den Divisionsblock 51. In Fig. 3 sind n=3 Schalteinheiten vorgesehen. Mit anderen Worten sind bei der Ausführungsform von Fig. 3 die (dargestellten und nicht dargestellten) Korrekturregler 24 dazu eingerichtet, jeweils ein Steuersignal 13 der Schalteinheiten 8 derart anzupassen, dass die Ausgangsströme I_{U1}-I_{UW3} der Schalteinheiten 8 jeweils einem gemittelten Summenstrom aus dem jeweiligen Ausgangsstrom I_{U1}-I_{W3} und allen korrespondierenden Ausgangsströmen I_{U1}-I_{W3} entsprechen.

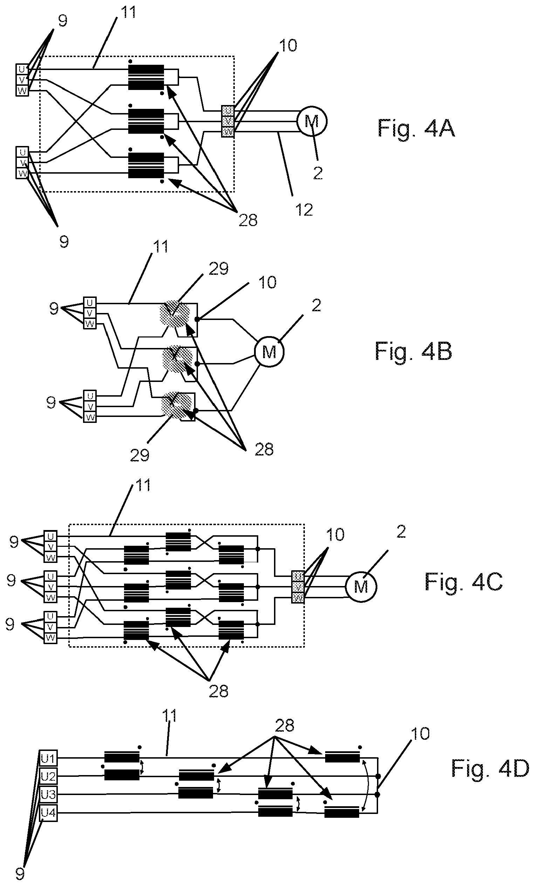

In den Fig. 4A-C ist die Verschaltung der Verbindungsleitungen 11 zu gemeinsamen Ausgängen 10 näher dargestellt. Die Verschaltung kann in einem Block 52 (siehe Fig. 2 und Fig. 3) erfolgen. Mit den beschriebenen Korrekturreglern 24 ist es möglich, Abweichungen zwischen den Ausgangsströmen I_{U1}-I_{W3} zu reduzieren. Um geringfügige verbleibende Abweichungen zwischen den Ausgangsströmen zu kompensieren und die Ausgangsströme I_{U1}-I_{W3} zu glätten, können die Verbindungsleitungen 11 Glättungsinduktivitätselemente 28 aufweisen. In Fig. 4A ist die Situation mit für n=2 Schalteinheiten 8 dargestellt. Jeweils zwei korrespondierende Verbindungsleitungen 11 sind dabei durch ein gemeinsames Glättungsinduktivitätselement 28 geführt, vorzugsweise gegengleich. Das Glättungsinduktivitätselement 28 in Fig. 4A kann beispielsweise durch eine Gleichtaktdrossel (auch als stromkompensierte Drossel bezeichnet) gebildet sein. Vorteil bei einer Gleichtaktdrossel ist die Kompensation von magnetischen Flüssen aufgrund der gegensinnigen Durchführung der Ausgangsströme, sodass die Gleichtaktdrosseln klein in ihrer Baugröße gehalten werden können. Gleichtaktstörungen werden unterdrückt.

In Fig. 4B ist sind jeweils zwei korrespondierende Verbindungsleitungen 11 gegengleich durch ein gemeinsames Glättungsinduktivitätselement 28 in Form eines vorzugsweise ringförmigen Magnetkernelements 29 geführt. Es kann sich um in-sich geschlossene Ferritringe handeln. Durch die gegengleiche Durchführung der Verbindungsleitungen 11 durch ein Magnetkernelement 29 heben sich die magnetischen Felder wie bei einer Gleichtaktdrossel auf. Beispielsweise kann es sich bei einem Magnetkernelement 29 um ein Ferritkernelement handeln. Selbstverständlich sind auch andere Materialien denkbar, wie z.B. Magnetkernelemente aus Metall, insbesondere Eisen oder Eisenpulver. Auf Grund der Aufhebung der erzeugten magnetischen Felder sättigen die Magnetkernelemente 29 nicht. Gleichtaktstörungen werden unterdrückt.

In Fig. 4C ist die Situation für n=3 Schalteinheiten dargestellt. Es ist erkennbar, dass jede Verbindungsleitung 11 zumindest einmal gemeinsam mit der Verbindungsleitung 11 eines jeden anderen korrespondierenden Ausgangs 9 durch ein Glättungsinduktivitätselement 28, beispielsweise eine Gleichtaktdrossel, geführt ist, wobei die Verbindungsleitungen 11 vorzugsweise gegenläufig durch die Glättungsinduktivitätselemente 28 geführt werden.

In Fig. 4D ist die Situation mit n=4 Schalteinheiten veranschaulicht. Um Glättungsinduktivitätselemente 28 einzusparen, ist die Anzahl an Glättungsinduktivitätselementen 28 im Vergleich zu Fig. 4C reduziert. Bei dieser Ausführungsform wird jede Verbindungsleitung 11 mit einer weiteren Verbindungsleitung 11 durch ein Glättungsinduktivitätselement 28, beispielsweise eine Gleichtaktdrossel, geführt. k-1 Verbindungsleitungen 11 sind dabei mit nur genau einer weiteren Verbindungsleitung 11 durch ein Glättungsinduktivitätselement 28 geführt. Genau eine Verbindungsleitung 11, im dargestellten Fall die k-te Verbindungsleitung 11 des Ausganges 9 mit der Bezeichnung U1, ist jedoch mit zwei weiteren Verbindungsleitungen 11, nämlich jene der Ausgänge 9 mit den Bezeichnungen U1 und U4, durch ein Glättungsinduktivitätselement 28 verbunden.

Die in den Fig. 4A-D gezeigten Anordnungen von Glättungsinduktivitätselementen 28 können auch als Glättungsinduktivitätsmatrix bezeichnet werden.

Fig. 5 zeigt schematisch und vereinfacht eine Schalteinheit 8, die als Wechselrichtereinheit 3 ausgebildet ist. Die Wechselrichtereinheit 3 besitzt drei Ausgänge 9, wobei jedem Ausgang 9 zwei Schalter 30 zugeordnet sind. Die Schalter können beispielsweise Feldeffekttransistoren oder IGBTs (englisch: Insulated-Gate Bipolar Transistor) sein.

Die Schalteinheiten 8 können auf einer gemeinsamen Leiterplatte 31 angeordnet werden, wie dies in Fig. 6 gezeigt ist. Auf der gemeinsamen Leiterplatte 31 können auch die Verbindungsleitungen 11 und die Glättungsinduktivitätselemente 28 angeordnet sein. Die Glättungsinduktivitätselemente 28 können in einen Anschlussblock mit Anschlussklemmen (nicht gezeigt) für die Maschine 2 integriert sein. Durch die Parallelschaltung von Schalteinheiten 8 können elektrische Maschinen 2 mit im Vergleich zur Leistung der einzelnen Schalteinheiten 8 größerer Leistung betrieben werden. Wenn eine elektrische Maschine 2 eine kleinere Leistung aufweist, kann auch die Parallelschaltung von weniger Schalteinheiten 8 genügen, als auf der gemeinsamen Leiterplatte 31 angeordnet sind. Wenn auf einer Leiterplatte 31 beispielsweise drei Schalteinheiten 8 angeordnet sind, aber zum Betrieb einer elektrischen Maschine 2 nur die Parallelschaltung von zwei Schalteinheiten 8 benötigt wird, kann die dritte Schalteinheit 8 zum Betreiben einer weiteren elektrischen Maschine 2 genutzt werden. Dies kommt der eingangs erwähnten, universellen Einsetzbarkeit und Skalierbarkeit entgegen, da für einen solchen Betrieb, der in Fig. 6 dargestellt ist, nur geringe Adaptionen notwendig sind. Somit kann eine gemeinsame Leiterplatte 31 mit mehreren Schalteinheiten 8 in großer Stückzahl hergestellt werden. Je nach Bedarf kann dann die Verschaltung der Leiterplatte 31 leicht angepasst werden.

## Patentansprüche

1. Spritzgießmaschine (1), insbesondere zum Herstellen von Kunststoffteilen, aufweisend:
mindestens eine elektrische Maschine (2), insbesondere einen Synchronmotor;
mehrere elektrisch parallel geschaltete Schalteinheiten (8), insbesondere Wechselrichtereinheiten (3), die zum Antreiben der elektrischen Maschine (2) eingerichtet sind, wobei jede Schalteinheit (8) zumindest einen elektrischen Ausgang (9) und zumindest einen dem Ausgang (9) zugeordneten elektrischen Schalter (30) aufweist, der gemäß einem Schaltmuster schaltbar ist, wobei korrespondierende Ausgänge (9) der Schalteinheiten (8) elektrisch parallel zu einem gemeinsamen Ausgang (10) verschaltet sind, der mit der elektrischen Maschine (2) verbunden ist;
zumindest eine übergeordnete Steuerung und/oder Regelung (14), die dazu eingerichtet ist, die Schalteinheiten (8) mit Steuersignalen (13) anzusteuern, um die elektrische Maschine (2) zu betreiben;
eine Messeinrichtung (15) zum Messen von Ausgangsströmen (I_{U1}-I_{W3}) an den Ausgängen (9) der Schalteinheiten (8); und
zumindest einen Korrekturregler (24), der dazu eingerichtet ist, im Falle einer Abweichung zwischen einem gemessenen Ausgangsstrom (I_{U1}-I_{W3}) an einem Ausgang (9) und einem Sollwert (S) für einen Ausgangsstrom (I_{U1}-I_{W3}) ein entsprechendes Steuersignal (13) anzupassen, sodass durch das Schaltmuster vorgegebene Schaltzeitpunkte des zumindest einen Schalters (30), der dem betreffenden Ausgang (9) zugeordnet ist, zeitlich nach vorne oder nach hinten verschoben werden und dadurch die Abweichung zwischen dem Sollwert (S) und dem Ausgangsstrom (I_{U1}-I_{W3}) reduziert wird, wobei der zumindest eine Korrekturregler (24) dazu eingerichtet ist, Schaltzeitpunkte, insbesondere die Schaltflanken, von Schaltern (30), die korrespondierenden Ausgängen (9) zugeordnet sind, zu synchronisieren, sodass diese gleichzeitig schalten, **dadurch gekennzeichnet, dass**
korrespondierende Ausgänge (9) der Schalteinheiten (8) über Verbindungsleitungen (11) mit den jeweiligen gemeinsamen Ausgängen (10) verbunden sind, wobei zum Glätten der Ausgangsströme (I_{U1}-I_{W3}) jede Verbindungsleitung (11) zumindest einmal gemeinsam gegenläufig mit der Verbindungsleitung (11) eines anderen korrespondierenden Ausgangs (9) durch ein Glättungsinduktivitätselement (28) geführt ist.

2. Spritzgießmaschine (1) nach Anspruch 1, **dadurch gekennzeichnet, dass** n Schalteinheiten (8) vorgesehen sind und jedem Ausgang (9) von zumindest n-1 Schalteinheiten (8) jeweils ein Korrekturregler (24) zugeordnet ist, der ein entsprechendes Steuersignal (13) anpasst, wenn der gemessene Ausgangsstrom (I_{U1}-I_{W3}) an dem Ausgang (9) von dem Sollwert (S) abweicht.

3. Spritzgießmaschine (1) nach Anspruch 1 oder 2, **dadurch gekennzeichnet, dass** der zumindest eine Korrekturregler (24) dazu eingerichtet ist, einen Offset-Signalwert (R) auf das Steuersignal (13) aufzuschalten, um das Steuersignal (13) anzupassen.

4. Spritzgießmaschine (1) nach Anspruch 3, **dadurch gekennzeichnet, dass** ein insbesondere nicht-flüchtiger Speicher vorgesehen ist, in dem der Offset-Signalwert (R) oder ein zeitlicher Mittelwert davon hinterlegbar ist.

5. Spritzgießmaschine (1) nach einem der Ansprüche 1 bis 4, **dadurch gekennzeichnet, dass** die Schalteinheiten (8) als Wechselrichtereinheiten (3) ausgebildet sind und jeweils zumindest zwei, vorzugsweise zumindest drei, elektrische Ausgänge (9) aufweisen.

6. Spritzgießmaschine nach einem der Ansprüche 1 bis 5, **dadurch gekennzeichnet, dass** n Schalteinheiten (8) vorgesehen sind und eine der Schalteinheiten (8) eine Referenz-Schalteinheit (8a) darstellt und allen Ausgängen (9) der anderen n-1 Schalteinheiten jeweils ein Korrekturregler (24), insbesondere ein P-, PI- oder PID-Regler, zugeordnet ist, wobei die Korrekturregler (24) dazu eingerichtet sind, jeweils ein Steuersignal (13) der n-1 Schalteinheiten (8) derart anzupassen, dass die Ausgangsströme (I_{U1}-I_{W3}) der anderen n-1 Schalteinheiten (8) den jeweils korrespondierenden Ausgangsströmen (I_{U1}-I_{W3}) der Referenz-Schalteinheit (8a) entsprechen.

7. Spritzgießmaschine (1) nach einem der Ansprüche 1 bis 5, **dadurch gekennzeichnet, dass** allen Ausgängen (9) sämtlicher Schalteinheiten (8) jeweils ein Korrekturregler (24), insbesondere ein P-, PI- oder PID-Regler, zugeordnet ist, wobei die Korrekturregler (24) dazu eingerichtet sind, jeweils ein Steuersignal (13) der Schalteinheiten (8) derart anzupassen, dass die Ausgangsströme (I_{U1}-I_{W3}) der Schalteinheiten (8) jeweils einem gemittelten Summenstrom (I_{U_sum}) aus dem jeweiligen Ausgangsstrom (I_{U1}-I_{W3}) und allen korrespondierenden Ausgangsströmen (I_{U1}-I_{W3}) entsprechen.

8. Spritzgießmaschine (1) nach einem der Ansprüche 1 bis 7, wobei die Verbindungsleitungen (11) von korrespondierenden Ausgängen (9) der Schalteinheiten (8) durch eine Gleichtaktdrossel oder ein vorzugsweise in-sich geschlossenes, insbesondere ringförmiges, Magnetkernelement (29) als Glättungsinduktivitätselement (28) geführt sind.

9. Spritzgießmaschine (1) nach einem der Ansprüche 1 bis 8, wobei jede Verbindungsleitung (11) zumindest einmal gemeinsam mit der Verbindungsleitung (11) eines jeden anderen korrespondierenden Ausgangs (9) durch ein Glättungsinduktivitätselement (28) geführt ist.

10. Verfahren zum Synchronisieren von Ausgangsströmen (I_{U1}-I_{W3}) von elektrisch parallel geschalteten Schalteinheiten (8), die mit einer elektrischen Maschine (2) einer Spritzgießmaschine (1) verbunden sind, wobei jede Schalteinheit (8) zumindest einen elektrischen Ausgang (9) und zumindest einen dem Ausgang (9) zugeordneten elektrischen Schalter (30) aufweist, der gemäß einem Schaltmuster geschaltet wird, wobei korrespondierende Ausgänge (9) der Schalteinheiten (8) elektrisch parallel zu einem gemeinsamen Ausgang (10) für die elektrische Maschine (2) verschaltet sind und das Verfahren folgende Schritte aufweist:
Ausgeben von Steuersignalen (13) an die Schalteinheiten (8);
Messen von Ausgangsströmen (I_{U1}-I_{W3}) an den Ausgängen (9) der Schalteinheiten (8);
Vergleichen gemessener Ausgangsströme (I_{U1}-I_{W3}) mit jeweils einem Sollwert (S) für einen Ausgangsstrom (I_{U1}-I_{W3});
Anpassen eines entsprechenden Steuersignals (13) durch zumindest einen Korrekturregler (24) im Falle einer Abweichung zwischen einem gemessenen Ausgangsstrom (I_{U1}-I_{W3}) an einem Ausgang (9) und dem Sollwert (S), sodass durch das Schaltmuster vorgegebene Schaltzeitpunkte des zumindest einen Schalters (30), der dem betreffenden Ausgang (9) zugeordnet ist, zeitlich nach vorne oder nach hinten verschoben werden und dadurch die Abweichung zwischen dem Sollwert (S) und dem Ausgangsstrom (I_{U1}-I_{W3}) reduziert wird, wobei der zumindest eine Korrekturregler (24) Schaltzeitpunkte, insbesondere die Schaltflanken, von Schaltern (30), die korrespondierenden Ausgängen (9) zugeordnet sind, synchronisiert, sodass diese gleichzeitig schalten, **dadurch gekennzeichnet, dass** korrespondierende Ausgänge (9) der Schalteinheiten (8) über Verbindungsleitungen (11) mit den jeweiligen gemeinsamen Ausgängen (10) verbunden sind, wobei zum Glätten der Ausgangsströme (I_{U1}-I_{W3}) jede Verbindungsleitung (11) zumindest einmal gemeinsam gegenläufig mit der Verbindungsleitung (11) eines anderen korrespondierenden Ausgangs (9) durch ein Glättungsinduktivitätselement (28) geführt ist.

11. Verfahren nach Anspruch 10, wobei der zumindest eine Korrekturregler einen Offset-Signalwert (R) auf das Steuersignal (13) aufschaltet, um das Steuersignal (13) anzupassen.

12. Verfahren nach Anspruch 11, wobei der Offset-Signalwert (R) oder ein zeitlicher Mittelwert davon in einen insbesondere nicht-flüchtigen Speicher hinterlegt wird, sodass der Offset-Signalwert (R) oder dessen zeitlicher Mittelwert bei einer erneuten Anwendung des Verfahrens zur Verfügung steht.

13. Verfahren nach Anspruch einem der Ansprüche 10 bis 12, wobei n Schalteinheiten (8) vorgesehen sind und eine der Schalteinheiten (8) eine Referenz-Schalteinheit (8a) darstellt, wobei jedem Ausgang (9) der anderen n-1 Schalteinheiten (8) ein Korrekturregler (24) zugeordnet ist und die Sollwerte (S) aller Ausgangsströme (I_{U1}-I_{W3}) der anderen n-1 Schalteinheiten (8) durch die zu den jeweiligen Ausgangsströmen (I_{U1}-I_{W3}) der anderen n-1 Schalteinheiten (8) korrespondierenden Ausgangsströme (I_{U1}-I_{W3}) der Referenz-Schalteinheit (8a) gebildet werden.

14. Verfahren nach einem der Ansprüche 10 bis 12, wobei jedem Ausgang (9) ein Korrekturregler (24) zugeordnet ist und für jeden Ausgangsstrom (I_{U1}-I_{W3}) ein gemittelter Summenstrom (I_{U_sum}) aus dem jeweiligen Ausgangsstrom (I_{U1}-I_{W3}) und allen korrespondierenden Ausgangsströmen (I_{U1}-I_{W3}) als Sollwert (S) verwendet wird.

## Claims

1. Injection moulding machine (1), in particular for producing plastic parts, comprising:
at least one electrical machine (2), in particular a synchronous motor;
multiple electrically parallel-connected switching units (8), in particular inverter units (3), which are designed to drive the electrical machine (2), wherein each switching unit (8) having at least one electrical output (9) and at least one electrical switch (30) associated with the output (9), which can be switched according to a switching pattern, wherein corresponding outputs (9) of the switching units (8) are electrically connected in parallel to a common output (10), which is connected to the electrical machine (2);
at least one primary open-loop and/or closed-loop control (14), which is designed to actuate the switching units (8) with control signals (13), in order to operate the electrical machine (2) ;
a measuring device (15) for measuring output currents (I_{U1}-I_{W3}) at the outputs (9) of the switching units (8); and
at least one correction controller (24), which is configured to adjust a corresponding control signal (13) in the event of a deviation between a measured output current (I_{U1}-I_{W3}) at an output (9) and a target value (S) for an output current (I_{U1}-I_{W3}), such that switching times, which are predetermined by the switching pattern, of at least one switch (30), which is associated with the relevant output (9), are shifted forwards or backwards in time and thereby the deviation between the target value (S) and the output current (I_{U1}-I_{W3}) is reduced, wherein the at least one correction controller (24) is configured to synchronise switching times, in particular the switching edges, of switches (30), which are associated with corresponding outputs (9), such that these switch simultaneously, **characterised in that**
corresponding outputs (9) of the switching units (8) are connected to the respective common outputs (10) via connecting lines (11), wherein, in order to smooth the output currents (I_{U1}-I_{W3}), each connecting line (11) is guided through a smoothing inductance element (28) in opposite directions at least once together with the connecting line (11) of another corresponding output (9)

2. Injection moulding machine (1) according to claim 1, **characterised in that**, n switching units (8) are provided and each output (9) of at least n-1 switching units (8) is associated with a respective correction controller (24), which adjusts a corresponding control signal (13) when the measured output current (I_{U1}-I_{W3}) at the output (9) deviates from the target value (S) .

3. Injection moulding machine (1) according to claim 1 or 2, **characterised in that** the at least one correction controller (24) is designed to apply an offset signal value (R) to the control signal (13) in order to adjust the control signal (13).

4. Injection moulding machine (1) according to claim 3, **characterised in that** a memory, in particular a non-volatile memory, is provided, in which the offset signal value (R) or a temporal average value thereof can be stored.

5. Injection moulding machine (1) according to one of claims 1 to 4, **characterised in that** the switching units (8) are configured as inverter units (3) and each have at least two, preferably at least three, electrical outputs (9).

6. Injection moulding machine according to one of claims 1 to 5, **characterised in that** n switching units (8) are provided and one of the switching units (8) represents a reference switching unit (8a) and all outputs (9) of the other n-1 switching units are each associated with a correction controller (24), in particular a P, PI or PID controller, wherein the correction controllers (24) are designed in each case to adjust a control signal (13) of the n-1 switching units (8) in such a way that the output currents (I_{U1}-I_{W3}) of the other n-1 switching units (8) correspond to the respective corresponding output currents (I_{U1}-I_{W3}) of the reference switching unit (8a).

7. Injection moulding machine (1) according to one of the claims 1 to 5, **characterised in that** a correction controller (24), in particular a P, PI or PID controller, is associated in each case with all outputs (9) of all switching units (8), wherein the correction controllers (24) are designed in each case to adjust a control signal (13) of the switching units (8) in such a way that the output currents (I_{U1}-I_{W3}) of the switching units (8) each correspond to an averaged total current (I_{U_sum}) from the respective output current (I_{U1}-I_{W3}) and all corresponding output currents (I_{U1}-I_{W3}).

8. Injection moulding machine (1) according to one of claims 1 to 7, wherein the connecting lines (11) of corresponding outputs (9) of the switching units (8) are guided through a common mode choke or a preferably self-contained, in particular annular, magnetic core element (29) as smoothing inductance element (28) .

9. Injection moulding machine (1) according to one of claims 1 to 8, wherein each connecting line (11) is guided at least once together with the connecting line (11) of each other corresponding output (9)through a smoothing inductance element (28) .

10. Method for synchronising output currents (I_{U1}-I_{W3}) of electrically parallel-connected switching units (8), which are connected to an electrical machine (2) of an injection moulding machine (1), wherein each switching unit (8) has at least one electrical output (9) and at least one electrical switch (30) associated with the output (9), which is switched according to a switching pattern, wherein corresponding outputs (9) of the switching units (8) are electrically connected in parallel to a common output (10) for the electrical machine (2) and the method has the following steps:
outputting control signals (13) to the switching units (8);
measuring output currents (I_{U1}-I_{W3}) at the outputs (9) of the switching units (8);
comparing measured output currents (I_{U1}-I_{W3}) with a target value (S) for each output current (I_{U1}-I_{W3});
adjusting a corresponding control signal (13) by at least one correction controller (24) in the event of a deviation between a measured output current (I_{U1}-I_{W3}) at an output (9) and the target value (S), such that switching times, which are predetermined by the switching pattern, of the at least one switch (30), which is associated with the relevant output (9), are shifted forwards or backwards in time and thereby reducing the deviation between the target value (S) and the output current (I_{U1}-I_{W3}), wherein the at least one correction controller (24) synchronises switching times, in particular the switching edges, of switches (30), which are associated with corresponding outputs (9), such that these switch simultaneously, **characterised in that**, corresponding outputs (9) of the switching units (8) are connected to the respective common outputs (10) via connecting lines (11), wherein in order to smooth the output currents (I_{U1}-I_{W3}) each connecting line (11) is guided through a smoothing inductance element (28) in opposite directions at least once together with the connecting line (11) of another corresponding output (9).

11. Method of claim 10, wherein the at least one correction controller applies an offset signal value (R) to the control signal (13) to adjust the control signal (13).

12. Method according to claim 11, wherein the offset signal value (R) or a temporal average value thereof is stored in a memory, in particular a non-volatile memory, so that the offset signal value (R) or its temporal average value is available when the method is used again.

13. Method according to any one of claims 10 to 12, wherein n switching units (8) are provided and one of the switching units (8) represents a reference switching unit (8a), wherein each output (9) of the other n-1 switching units (8) is associated with a correction controller (24) and the target values (S) of all output currents (I_{U1}-I_{W3}) of the other n-1 switching units (8) are formed by the output currents (I_{U1}-I_{W3}) of the reference switching unit (8a) corresponding to the respective output currents (I_{U1}-I_{W3}) of the other n-1 switching units (8) .

14. Method according to one of claims 10 to 12, wherein a correction controller (24) is associated with each output (9) and for each output current (I_{U1}-I_{W3}) an averaged total current (IUₛᵤₘ) of the respective output current (I_{U1}-I_{W3}) and all corresponding output currents (I_{U1}-I_{W3}) is used as target value (S) .

## Revendications

1. Machine de moulage par injection (1), plus particulièrement pour la fabrication de pièces en matière plastique, comprenant :
au moins une machine électrique (2), plus particulièrement un moteur synchrone ;
plusieurs unités de commutation électrique (8) branchées en parallèle, plus particulièrement des unités de convertisseurs (3), qui sont conçues pour l'entraînement de la machine électrique (2), dans laquelle chaque unité de commutation (8) comprend au moins une sortie électrique (9) et au moins un commutateur électrique (30) correspondant à la sortie (9), qui peut être commutée selon un motif de commutation, dans laquelle les sorties (9) correspondantes des unités de commutation (8) sont branchées électriquement en parallèle par rapport à une sortie commune (10) qui est reliée à la machine électrique (2) ;
au moins une commande et/ou régulation principale (14), qui est conçue pour contrôler les unités de commutation (8) avec des signaux de commande (13) afin de faire fonctionner la machine électrique (2) ;
un dispositif de mesure (15) pour la mesure de courants de sortie (I_{U1} - I_{W3}) au niveau des sorties (9) des unités de commutation (8) ; et
au moins un régulateur de correction (24) qui est conçu pour adapter, dans le cas d'un écart entre un courant de sortie (I_{U1} - I_{W3}) mesuré au niveau d'une sortie (9) et une valeur de consigne (S) pour un courant de sortie (I_{U1} - I_{W3}), un signal de commande (13) correspondant, de sorte que les moments de commutation, prédéterminés à l'aide du motif de commutation, de l'au moins un commutateur (30), qui correspond à la sortie (9) concernée, sont décalés de manière temporelle vers l'avant ou vers l'arrière et l'écart entre la valeur de consigne (S) et le courant de sortie (I_{U1} - I_{W3}) est ainsi réduit, dans laquelle l'au moins un régulateur de correction (24) est conçu pour synchroniser les moments de commutation, plus particulièrement les flancs de commutation, des commutateurs (30), qui correspondent aux sorties (9) correspondantes, de sorte que celles-ci commutent simultanément, **caractérisée en ce que**
les sorties (9) correspondantes des unités de commutation (8) sont reliées, par l'intermédiaire de lignes de raccordement (11), avec les sorties communes (10) respectives, dans laquelle, pour le lissage des courants de sortie (I_{U1} - I_{W3}), chaque ligne de raccordement (11) est guidée, au moins une fois en commun en sens inverse avec la ligne de raccordement (11) d'une autre sortie (9) correspondante, à travers un élément à inductance de lissage (28).

2. Machine de moulage par injection (1) selon la revendication 1, **caractérisé en ce que** n unités de commutation (8) sont prévues et, à chaque sortie (9) d'au moins n-1 unités de commutation (8), correspondant respectivement un régulateur de correction (24) qui adapte un signal de commande (13) correspondant lorsque le courant de sortie (I_{U1} - I_{W3}) mesuré au niveau de la sortie (9) s'écarte de la valeur de consigne (S).

3. Machine de moulage par injection (1) selon la revendication 1 ou 2, **caractérisée en ce que** l'au moins un régulateur de correction (24) est conçu pour ajouter une valeur de signal d'offset (R) au signal de commande (13) afin d'adapter le signal de commande (13).

4. Machine de moulage par injection (1) selon la revendication 3, **caractérisée en ce que**, plus particulièrement, une mémoire non volatile est prévue, dans laquelle la valeur de signal d'offset (R) ou une valeur moyenne temporelle de celle-ci peut être enregistrée.

5. Machine de moulage par injection (1) selon l'une des revendications 1 à 4, **caractérisée en ce que** les unités de commutation (8) sont conçues comme des unités de convertisseurs (3) et comprennent chacune au moins deux, de préférence au moins trois, sorties électriques (9).

6. Machine de moulage par injection (1) selon l'une des revendications 1 à 5, **caractérisée en ce que** n unités de commutation (8) sont prévues et une des unités de commutation (8) constitue une unité de commutation de référence (8a) et, à toutes les sorties (9) des n-1 autres unités de commutation, correspond respectivement un régulateur de correction (24), plus particulièrement un régulateur P, PI ou PID, dans laquelle les régulateurs de correction (24) sont conçus pour adapter respectivement un signal de commande (13) des n-1 unités de commutation (8) de sorte que les courants de sortie (I_{U1} - I_{W3}) des n-1 autres unités de commutation (8) correspondent aux courants de sortie (I_{U1} - I_{W3}) correspondants de l'unité de commutation de référence (8a).

7. Machine de moulage par injection (1) selon l'une des revendications 1 à 5, **caractérisée en ce que**, à toutes les sorties (9) de toutes les unités de commutation (8), correspond respectivement un régulateur de correction (24), plus particulièrement un régulateur P, PI ou PID, dans laquelle les régulateurs de correction (24) sont conçus pour adapter respectivement un signal de commande (13) des unités de commutation (8) de sorte que les courants de sortie (I_{U1} - I_{W3}) des unités de commutation (8) correspondent respectivement à un courant total moyenné (I_{U_sum}) du courant de sortie (I_{U1} - I_{W3}) respectif et de tous les courants de sortie (I_{U1} - I_{W3}) correspondants.

8. Machine de moulage par injection (1) selon l'une des revendications 1 à 7, **caractérisée en ce que** les lignes de raccordement (11) des sorties (9) correspondantes des unités de commutation (8) sont guidées à travers une self de mode commun ou un élément à noyau magnétique (29), de préférence fermé sur lui-même, plus particulièrement de forme annulaire, en tant qu'élément à inductance de lissage (28).

9. Machine de moulage par injection (1) selon l'une des revendications 1 à 8, dans laquelle chaque ligne de raccordement (11) est guidée, au moins une fois en commun avec la ligne de raccordement (11) d'une autre sortie (9) correspondante, à travers un élément à inductance de lissage (28).

10. Procédé de synchronisation de courants de sortie (I_{U1} - I_{W3}) d'unités de commutation (8) branchées électriquement en parallèle, qui sont reliées avec une machine électrique (2) d'une machine de moulage par injection (1), dans lequel chaque unité de commutation (8) comprend au moins une sortie électrique (9) et au moins un commutateur électrique (30) correspondant à la sortie (9), qui est commutée selon un motif de commutation, dans lequel les sorties (9) correspondantes des unités de commutations (8) sont branchées électriquement en parallèle par rapport à une sortie commune (10) pour la machine électrique (2) et le procédé comprend les étapes suivantes :
envoi de signaux de commande (13) aux unités de commutation (8) ;
mesure des courants de sortie (I_{U1} - I_{W3}) au niveau des sorties (9) des unités de commutations (8) ;
comparaison des courants de sortie (I_{U1} - I_{W3}) mesurés respectivement avec une valeur de consigne (S) pour un courant de sortie (I_{U1} - I_{W3}) ;
adaptation d'un signal de commande (13) correspondant à l'aide d'au moins un régulateur de correction (24) dans le cas d'un écart entre un courant de sortie (I_{U1} - I_{W3}) mesuré au niveau d'une sortie (9) et la valeur de consigne (S), de sorte que les moments de commutation, prédéterminés à l'aide du motif de commutation, de l'au moins un commutateur (30), qui correspond à la sortie (9) concernée, sont décalés de manière temporelle vers l'avant ou vers l'arrière et l'écart entre la valeur de consigne (S) et le courant de sortie (I_{U1} - I_{W3}) est ainsi réduit, dans laquelle l'au moins un régulateur de correction (24) synchronise les moments de commutation, plus particulièrement les flancs de commutation, des commutateurs (30), qui correspondent aux sorties (9) correspondantes, de sorte que celles-ci commutent simultanément, **caractérisé en ce que** les sorties (9) correspondantes des unités de commutation (8) sont reliées, par l'intermédiaire de lignes de raccordement (11), avec les sorties communes (10) respectives, dans lequel, pour le lissage des courants de sortie (I_{U1} - I_{W3}), chaque ligne de raccordement (11) est guidée, au moins une fois en commun en sens inverse avec la ligne de raccordement (11) d'une autre sortie (9) correspondante, à travers un élément à inductance de lissage (28).

11. Procédé selon la revendication 10, dans lequel l'au moins un régulateur de correction ajoute une valeur de signal d'offset (R) au signal de commande (13) afin d'adapter le signal de commande (13).

12. Procédé selon la revendication 11, dans lequel la valeur de signal d'offset (R) ou une valeur moyenne temporelle de celle-ci est enregistrée dans une mémoire, plus particulièrement non volatile, de sorte que la valeur de signal d'offset (R) ou sa valeur moyenne temporelle reste disponible pour une nouvelle exécution du procédé.

13. Procédé selon l'une des revendications 10 à 12, dans lequel n unités de commutation (8) sont prévues et une des unités de commutation (8) constitue une unité de commutation de référence (8a), dans lequel, à chaque sortie (9) des n-1 autres unités de commutation (8), correspond un régulateur de correction (24) et les valeurs de consigne (S) de tous les courants de sortie (I_{U1} - I_{W3}) des n-1 autres unités de commutation (8) sont formées par les courants de sortie (I_{U1} - I_{W3}) correspondants de l'unité de commutation de référence (8a), correspondant aux courants de sortie (I_{U1} - I_{W3}) respectifs des n-1 autres unités de commutation (8).

14. Procédé selon l'une des revendications 10 à 12, dans lequel, à chaque sortie (9), correspond un régulateur de correction (24) et, pour chaque courant de sortie (I_{U1} - I_{W3}), un courant total moyenné (I_{U_sum}) du courant de sortie (I_{U1} - I_{W3}) et de tous les courants de sortie (I_{U1} - I_{W3}) correspondants est utilisé en tant que valeur de consigne (S).
